# EUROPÄISCHE PATENTSCHRIFT

(11) **EP 1 185 359 B1**
(45) Veröffentlichungstag und Bekanntmachung des Hinweises auf die Patenterteilung: **02.05.2003**
(21) Anmeldenummer: 00942047.2
(22) Anmeldetag: 10.06.2000
(51) Int. Cl.: B01F 13/00, B01F 5/06

(54) **MIKROMISCHER**
MICROMIXER
MICROMELANGEUR

(30) Priorität: 16.06.1999 DE 19927554
(43) Veröffentlichungstag der Anmeldung: 13.03.2002
(73) Patentinhaber: INSTITUT FÜR MIKROTECHNIK MAINZ GmbH, 55129 Mainz-Hechtsheim (DE)
(72) Erfinder: EHRFELD, Wolfgang, D-55124 Mainz (DE); MICHEL, Frank, D-55268 Nieder-Olm (DE); LOHF, Astrid, D-55129 Mainz (DE); GRAEFF, Volker, D-55131 Mainz (DE)
(74) Vertreter: Fuchs Mehler Weiss & Fritzsche
(86) Internationale Anmeldenummer: EP0005366
(87) Internationale Veröffentlichungsnummer: WO00076648

(56) Entgegenhaltungen:
- EP-A- 0 495 169
- EP-A- 0 870 541
- WO-A-94/21372
- US-A- 5 595 712

## Beschreibung

Die Erfindung betrifft einen Mikromischer zum Mischen von mindestens zwei Edukten mit Durchlässen zum Zuführen der Edukte und zum Abführen des Mischprodukts, mit mindestens einer Mischplatte mit Mischzellen begrenzenden Mikrostrukturen, wobei jede Mischzelle eine Zuführkammer aufweist, an die mindestens eine Gruppe von Kanalfingern angrenzt, die zur Bildung eines Mischbereichs kammartig zwischen die Kanalfinger einer Gruppe der benachbarten Zuführkammer eingreift, und mit einer auf der ersten Platte angeordneten Abführplatte, die über jedem Mischbereich einen Auslaßschlitz aufweist, der sich senkrecht zu den Kanalfingern erstreckt.

Obwohl Mikrofluidkomponenten für analytische Anwendungen schon seit einigen Jahren entwickelt werden, sind Technologien der Mikrotechnik erst seit kurzer Zeit auf die Entwicklung von Vorrichtungen für chemische Synthesen, sogenannte Mikroreaktoren, angewendet worden. Wesentliche Komponenten solcher Mikroreaktoren sind Mischer und Wärmetauscher. Die herkömmlichen statischen Mikromischer nutzen das Prinzip der Multilamination aus, um ein schnelles Mischen über Diffusion zu gewährleisten. Dies ist der einzige Mischmechanismus, der bei den laminaren Strömungen in Mikrokanälen anwendbar ist. Das Erzeugen von abwechselnd angeordneten Lamellen durch geometrische Randbedingungen erlaubt ein gutes Mischen im mikroskopischen Bereich.

In der Veröffentlichung Ind. Eng. Chem. Res. 1999, 38, 1075-1082, W. Ehrfeld et al. ist ein gattungsgemäßer Mikromischer beschrieben. Dieser Einzelmischer besteht aus drei Bauteilen, einer mittels Röntgenlithographie und Galvanik strukturierten Platte, die einen Mischbereich und zwei Zuführkammern aufweist und in einem aus zwei Stücken bestehenden Gehäuse eingelassen ist. Im oberen Teil des Gehäuses sind Mittel zum Zuführen der Edukte und Abführen des Mischproduktes vorgesehen.

Der Einzelmischer weist zwei Mischzellen mit einem gemeinsamen Mischbereich auf. Die beiden fluiden Edukte werden in die Zuführkammern eingeführt und in den Kanalfingern auf Teilströme aufgeteilt. Die Teilströme des einen Eduktes stehen nicht mit den Teilströmen des anderen Eduktes in Kontakt, da sie durch Mikrowände in Form von Stegen voneinander getrennt sind. Die beiden Edukte kommen zum ersten Mal im Schlitzbereich, der über den Kanalfingern und senkrecht zu ihnen angeordnet ist, miteinander in Kontakt. Vom Schlitz wird das Mischprodukt aus dem Gehäuse herausgeführt. Über die Schlitzbreite wird der Druckabfall im Mischbereich eingestellt.

Ein großer Nachteil dieses Einzelmischers ist, daß der Durchsatz sehr begrenzt ist. Bei einem Druckverlust von ca. 1,2 bar wird nur ein Durchsatz von 0,8 l/h erreicht. Wegen dieses geringen Durchsatzes läßt sich der Einzelmischer nur begrenzt in der großchemischen Produktion einsetzen. Um diesem Problem abzuhelfen, wurde versucht, zehn Einzelmischer parallel in einem Gehäuse anzuordnen und gemeinsam aus jeweils einer Quelle mit den Edukten zu versorgen, indem die Einzelmischer sternförmig mit der Zuführung für das eine Edukt in der Mitte des Sterns und Zuführleitungen für das zweite Edukt um den Stern herum angeordnet wurden (a.a.O.). Doch durch diese Maßnahme ließ sich der Durchsatz bei einem Druckverlust von ca. 1,2 bar nur von 0,8 l/h auf ca. 3 l/h steigern.

Aufgabe der vorliegenden Erfindung ist es, einen Mikromischer zur Verfügung zu stellen, der unter Ausnutzung des gleichen Mischprinzips wie bei herkömmlichen Mikromischern einen deutlich gesteigerten Durchsatz bei gleichem Druckverlust erlaubt.

Gelöst wird diese Aufgabe durch einen Mikromischer zum Mischen von zwei Edukten mit Durchlässen zum Zuführen der Edukte und/ oder zum Abführen des Mischprodukts, mit mindestens einer Mischplatte mit Mischzellen begrenzenden Mikrostrukturen, wobei jede Mischzelle eine Zuführkammer aufweist, an die mindestens eine Gruppe von Kanalfingern angrenzt, die zur Bildung eines Mischbereichs kammartig zwischen die Kanalfinger einer Gruppe der benachbarten Zuführkammern eingreift, und mit einer auf der ersten Platte angeordneten Abführplatte, die über jeden Mischbereich einen Auslaßschlitz aufweist, der sich senkrecht zu den Kanalfingern erstreckt, und der dadurch gekennzeichnet ist, daß jede Mischzelle mindestens zwei Mischbereiche aufweist.

Im erfindungsgemäßen Mikromischer wird die Anzahl der Mikrostrukturen pro Fläche und damit der Durchsatz stark erhöht. Bei dem erfindungsgemäßen Mikromischer werden bei einem Druckverlust von ca. 1,2 bar Durchsätze von mehreren hundert l/h erreicht. Dies ist ein Vielfaches der Durchsätze des Einzelmischers und der parallel geschalteten Einzelmischer. Die Platten des Mikromischers können aus Siliciumwafern hergestellt werden, die durch plasmaunterstütztes Tiefenätzen strukturiert werden und miteinander beispielsweise über anodisches Bonden verbunden werden. Die Platten können auch durch Strukturieren eines Resists, beispielsweise lithographisch oder mittels Laserstrahlung, und anschließender galvanischer Abformung erhalten werden. Hier können insbesondere Mikrostrukturen mit großem Aspektverhältnis realisiert werden.

Mit dem Mikromischer zu mischende Edukte können unabhängig voneinander Gase, Flüssigkeiten, Lösungen oder deren Mischungen sein. Der Mikromischer eignet sich besonders zur Herstellung von Mischungen zweier Flüssigkeiten oder Lösungen, von flüssig-flüssig Emulsionen oder von Gas-flüssig Dispersionen.

Bevorzugt liegt die Breite der einzelnen Kanalfinger im Bereich von 5 bis 150 µm und die Höhe der die Kanalfinger begrenzenden Wände im Bereich von 50 µm bis 2 mm. Eine Gruppe von Kanalfingern umfaßt vorzugsweise 3 oder mehr Kanalfinger. Die Breite der Auslaßschlitze wird aufgrund des notwendigen Druckverlustes vorzugsweise im Bereich von 10 um bis 1 mm und insbesondere kleiner als die Höhe der die Kanalfinger begrenzenden Wände gewählt. Hierbei muß zur vollständigen Mischung der Edukte die Breite der Auslaßschlitze in der Abführplatte kleiner sein als der sich überlappende Bereich der benachbarten Kanalfinger im Mischbereich.

Es werden im wesentlichen zwei Möglichkeiten bevorzugt, den erfindungsgemäßen Mikromischer zu realisieren. Die eine Möglichkeit besteht darin, in Anlehnung an den Einzelmischer zwei Zuführkammern vorzusehen, die aber jede parallel angeordnete Hauptkanäle aufweisen, die kammartig ineinandergreifen und von denen Kanalfinger abzweigen, die wiederum kammartig ineinandergreifen und die Mischbereiche bilden. Durch diese Anordnung wird sowohl die Anzahl der Mischbereiche pro Mischzelle als auch der Flächenanteil der Mischbereiche an der Gesamtfläche der Mischzelle erhöht und somit auch der Durchsatz pro Fläche. Die entsprechende Abführplatte weist eine Schar paralleler Schlitze auf, deren Anzahl gleich der Anzahl der Mischbereiche ist.

Bevorzugt weist jede Zuführkammer zwei oder mehr, besonders bevorzugt vier oder mehr Hauptkanäle auf. Vorteilhaft zweigen zu beiden Seiten längs der Hauptkanäle die Kanalfinger ab.

Dieser Mikromischer eröffnet die Möglichkeit, zwei oder mehrere seiner Art zu einem Mikromischersystem zu integrieren. Dazu werden beide Mikromischer übereinander angeordnet und die Durchbrüche zum Zuführen der Edukte und zum Abführen der Mischprodukte derart ausgebildet, daß das Mischprodukt des einen Mikromischers dem anderen Mikromischer als zweites Edukt zugeführt wird. Dadurch kann man nun auch Produkte herstellen, deren Reaktion über zwei oder mehrere Stufen verläuft.

Bei der zuvor genannten Variante sind die Mikromischer fluidisch seriell miteinander verbunden, d.h. das Mischprodukt eines Mikromischers wird dem nächsten Mikromischer als eines der Edukte zugeführt.

Gemäß einer weiteren Variante sind die Mikromischer fluidisch parallel miteinander verbunden, d.h. allen Mikromischern werden die gleichen Edukte zugeführt und die Mischprodukte gemeinsam abgeführt.

Beide Varianten lassen sich vorteilhaft durch Übereinanderstapeln von Mischplatten und gegebenenfalls weiteren Zuführ- und/oder Verteilerplatten realisieren.

Die zweite bevorzugte Realisierungsmöglichkeit für den erfindungsgemäßen Mikromischer besteht darin, an allen Seiten der Zuführkammern in der Plattenebene Mischbereiche anzuordnen. Lediglich die Zuführkammern im Randbereich der Plattenebene weisen nur an ein oder zwei Seiten Mischbereiche auf. Hierdurch wird das Verhältnis von Mischbereichsfläche zu Mischzellenfläche erhöht und somit auch der Durchsatz pro Fläche erhöht. Dabei ist es im Sinne der Erfindung, so viele Mischzellen wie möglich auf der Mischplatte anzuordnen. Vorteilhaft weist die Mischplatte 10 oder mehr Mischzellen pro Quadratzentimeter auf.

Vorteilhafterweise sind die Zuführkammern entsprechend den Edukten altemierend in Reihen und/oder Spalten angeordnet. Dadurch läßt sich der Anteil ungenutzter Fläche weiter minimieren. Besonders vorteilhaft sind die Zuführkammern in 4 oder mehr Reihen und in 4 oder mehr Spalten angeordnet.

Eine optimale Flächenausnutzung erreicht man, wenn die Zuführkammern entweder eine viereckige oder eine dreieckige Grundfläche aufweisen, wobei Quadrate oder gleichseitige Dreiecke bevorzugt werden. Auch die Schlitze der entsprechenden Abführplatten liegen entlang der Kanten der Quadrate bzw. gleichseitigen Dreiecke, die flächendeckend über die Abführplatte angeordnet sind.

Für die Zuführung der Edukte zur Mischplatte haben sich im wesentlichen zwei Ansätze als vorteilhaft erwiesen. Der eine Ansatz besteht darin, die den Mischzellen abgewandte Seite der Mischplatte zu strukturieren. Dabei wird für jedes Edukt eine Vorratskammer ausgebildet. Von beiden Vorratskammern gehen Kanäle ab, die parallel angeordnet sind und unterhalb der Zuführkammern verlaufen. Wichtig ist dabei, daß die Kanäle der beiden Edukte kammartig ineinandergreifen, damit die Zuführkammer mit einem Edukt von Zuführkammern mit dem anderen Edukt umgeben ist. Jeder Kanal weist unter den Zuführkammern Durchbrüche auf, die in die Zuführkammern führen und durch die das Edukt in die Zuführkammer fließen kann. Die Mischplatte muß nicht zwingend einstückig ausgebildet sein, man kann auch eine Platte mit den Mischstrukturen herstellen und eine andere Platte mit den Zuführstrukturen ausbilden und beide Platten beispielsweise durch anodisches Bonden miteinander zu einer Mischplatte verbinden.

Der andere Ansatz, der Mischplatte die Edukte zuzuführen, besteht darin, unterhalb der Mischplatte zwei weitere Platten anzuordnen. Dabei bildet die eine Platte mit der Mischplatte eine Vorratskammer für das eine Edukt und die andere Platte mit der ersten Platte eine Vorratskammer für das zweite Edukt. Das in der der Mischplatte benachbarten Vorratskammer befindliche Edukt gelangt direkt durch Durchbrüche in der Mischplatte in die entsprechenden Zuführkammern. Um das andere Edukt zuzuführen, weist die erste zusätzliche Platte Durchbrüche auf, durch die Hohlkörper geführt werden, die auch durch Durchbrüche in der Mischplatte geführt werden und in den entsprechenden Zuführkammern münden. Durch diese Hohlkörper kann das zweite Edukt von der zweiten Vorratskammer in die Zuführkammern strömen. Der Strömungswiderstand in diesen Vorratskammern ist besonders gering, so daß die Edukte sehr gleichmäßig auf die einzelnen Zuführkammern verteilt werden. Allerdings ist der Platzbedarf größer als bei der Zufuhr über Strukturen in der Rückseite der Mischplatte.

Besonders wichtig für die Verwendung des Mikromischers als Mikroreaktor ist es, gegebenenfalls einen Wärmetauscher im Mikromischer zu integrieren. Der Wärmetauscher kann auf verschiedene Arten im Mikromischer integriert sein. Bevorzugt werden die folgenden Möglichkeiten: für Reaktionen oder Mischungen mit geringer Wärmetönung reicht es, wenn auf der Abführplatte zwischen den Schlitzen Hohlkörper angeordnet sind, durch die entweder Heizoder Kühlmittel fließt.

Bei höherer Wärmetönung kann man entweder die Abführplatte zweistückig ausbilden, in dem man zwei deckungsgleiche Abdeckplatten beabstandet übereinander anordnet, so daß sich eine Kammer bildet. Diese Kammer wird mit Heiz- oder Kühlmittel gefüllt. Um das Produkt durch das Heiz- oder Kühlmittel zu führen, werden analog zum oben beschriebenen Beispiel für die Zuführung der Edukte abgeplattete Hohlkörper verwendet, deren Umriß den Schlitzen entspricht und die in den Schlitzen der beiden Teile der Abführplatte angeordnet sind. Bei dieser Variante erreicht man eine besonders homogene Wärmeverteilung. Gemäß einer weiteren Ausführungsform kann die Abführplatte so dick gestaltet sein, daß in ihr senkrecht zu den Schlitzen Kanäle ausgebildet werden können, durch die das Heiz- oder Kühlmittel fließen kann.

Unter Umständen kann es auch notwendig sein, die Edukte auf eine bestimmte Temperatur zu bringen. Dazu wird vorteilhafterweise der Mikromischer verwendet, bei dem die Edukte über die zwei durch Platten gebildeten Vorratskammern zugeführt werden. Um das Temperieren der Edukte zu bewerkstelligen, fügt man zwischen der ersten Platte und der Mischplatte eine zusätzliche Platte ein, so daß zwischen der Mischplatte und dieser zusätzlichen Platte eine weitere Vorratskammer entsteht. In diese Vorratskammer wird nun das Kühl- oder Heizmittel eingeführt. Durch die Wärmetauscherkammer müssen beide Edukte durch Hohlkörper, beispielsweise Röhrchen, geführt werden. Die Hohlkörper müssen hierzu abgedichtet in den Platten befestigt werden. Dies kann durch Kleben, Löten, Diffusionsschweißen, Einpressen oder auch Aufbiegen geschehen.

Die vorliegende Erfindung soll anhand der beigefügten Zeichnungen näher erläutert werden. Dabei zeigen
- Fig. 1a: ein erstes Ausführungsbeispiel für eine Mischplatte,
- Fig. 1b: einen Ausschnitt aus der Mischplatte aus Fig. 1a,
- Fig. 1c: die zur Mischplatte aus Fig. 1a entsprechende Abführplatte,
- Fig. 2: ein Mischersystem,
- Fig. 3a: ein zweites Ausführungsbeispiel für eine Mischplatte und eine dazugehörige Abführplatte,
- Fig. 3b: einen Ausschnitt aus Fig. 3a,
- Fig. 3c: einen Schnitt durch den Ausschnitt in Fig. 3b längs der Linie IIIc-IIIc,
- Fig. 4: ein drittes Ausführungsbeispiel für eine Mischplatte,
- Fig. 5a: ein erstes Ausführungsbeispiel für die Eduktzufuhr,
- Fig. 5b: einen Schnitt durch Fig. 5a längs der Linie Vb-Vb,
- Fig. 6: ein zweites Ausführungsbeispiel für die Eduktzufuhr,
- Fig. 7: ein erstes Ausführungsbeispiel für einen integrierten Wärmetauscher,
- Fig. 8: ein zweites Ausführungsbeispiel für einen integrierten Wärmetauscher,
- Fig. 9: ein drittes Ausführungsbeispiel für einen integrierten Wärmetauscher,
- Fig. 10: ein viertes Ausführungsbeispiel für einen integrierten Wärmetauscher und
- Fig. 11: eine Explosionsdarstellung eines Mikromischers.

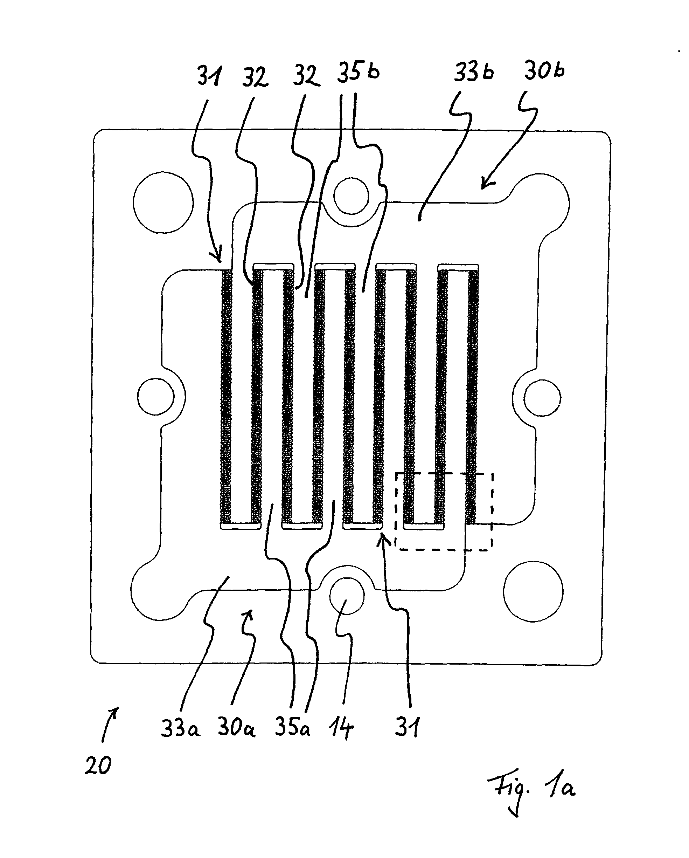

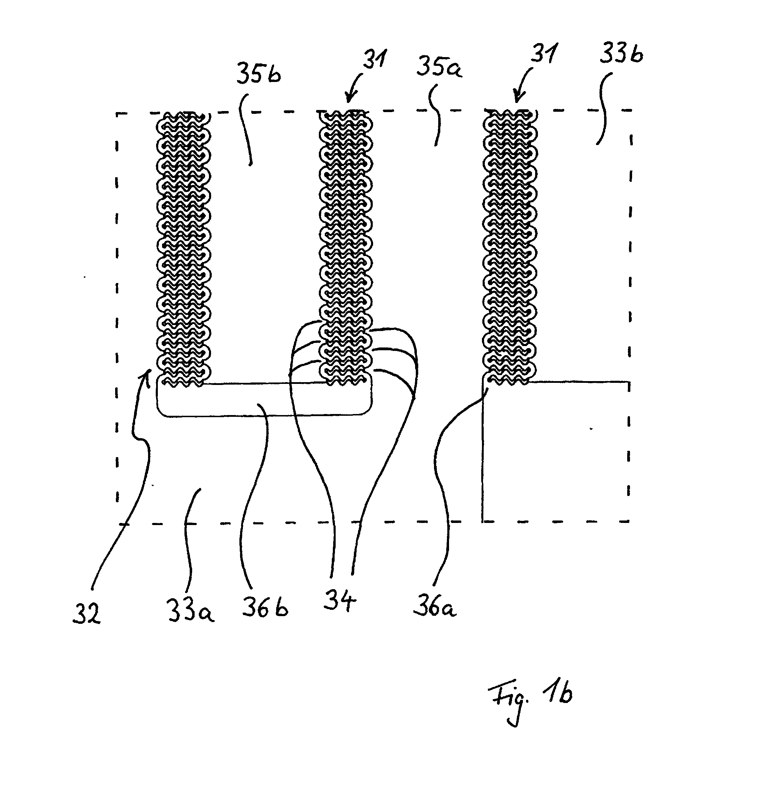

In Fig. 1a ist ein erstes Ausführungsbeispiel für eine Mischplatte 20 dargestellt.

Diese Mischplatte 20 weist zwei Zuführkammern 33a und 33b für die Edukte A,B auf. Beide Zuführkammern 33a,b fächern sich in vier Hauptkanäle 35a,b auf. Zu beiden Seiten längs der Hauptkanäle 35a,b befinden sich Mikrostrukturen 31, die die Mischbereiche 32 zwischen den Hauptkanälen 35 für die Edukte A und B definieren. Die Hauptkanäle 35a,b greifen kammförmig ineinander. Die Zuführkammern 33a,b bilden zusammen mit den Mischbereichen 32 jeweils eine Mischzelle 30a und 30b.

Die Mischplatte 20 weist außerdem noch Ausnehmungen 14 auf, die dazu dienen, die einzelnen, den Mikromischer bildenden Platten zusammenzuschrauben.

In Fig. 1b ist der in Fig. 1a von einer gestrichelten Linie begrenzte Ausschnitt vergrößert dargestellt. Man erkennt, daß von den Hauptkanälen 35a,b Kanalfinger 34 abgehen. Diese Kanalfinger sind durch Mikrostrukturen in Form von dünnen Wänden 36a voneinander getrennt. Zur Erhöhung der mechanischen Stabilität dieser Wände 36a sind sie gewellt und mäanderförmig ausgebildet. Dies ist notwendig, da die Breite dieser dünnen Wände 36a wie auch der Kanalfinger 34 nur ca. 40 µm beträgt. Die Länge der Kanalfinger 34 dagegen beträgt ungefähr 300 µm. Ferner ist zu erkennen, daß die Hauptkanäle 35a,b bzw. die Zuführkammern 33a,b voneinander durch breitere Wände 36b getrennt sind. Die Edukte A und B kommen erst in dem Moment miteinander in Berührung, in dem sie durch einen Schlitz in einer darüber angeordneten Abführplatte 21 (s. Fig. 1c) treten, der senkrecht zu den Kanalfingern 34 verläuft und sich über den gesamten Mischbereich 32 erstreckt. Der Schlitz hat dabei eine Breite von ca. 80 µm.

In Fig. 1c ist die der Mischplatte aus Fig. 1a entsprechenden Abführplatte 21 dargestellt. Die Schlitze 37 sind eine parallel zueinander verlaufende Kurvenschar, deren Anzahl der Anzahl der Mischbereiche in der darunterliegenden Mischplatte 20 entspricht und die derart angeordnet sind, daß sie senkrecht zu den Kanalfingern 34 verlaufen und sich über die gesamte Länge der jeweiligen Mischbereiche 32 erstrecken. Außerdem weist die Abführplatte 21 ebenfalls die Ausnehmungen 14 zum Zusammenschrauben des Mikromischers auf, sowie Durchlässe 12, durch die die Edukte oder auch das Produkt fließen können.

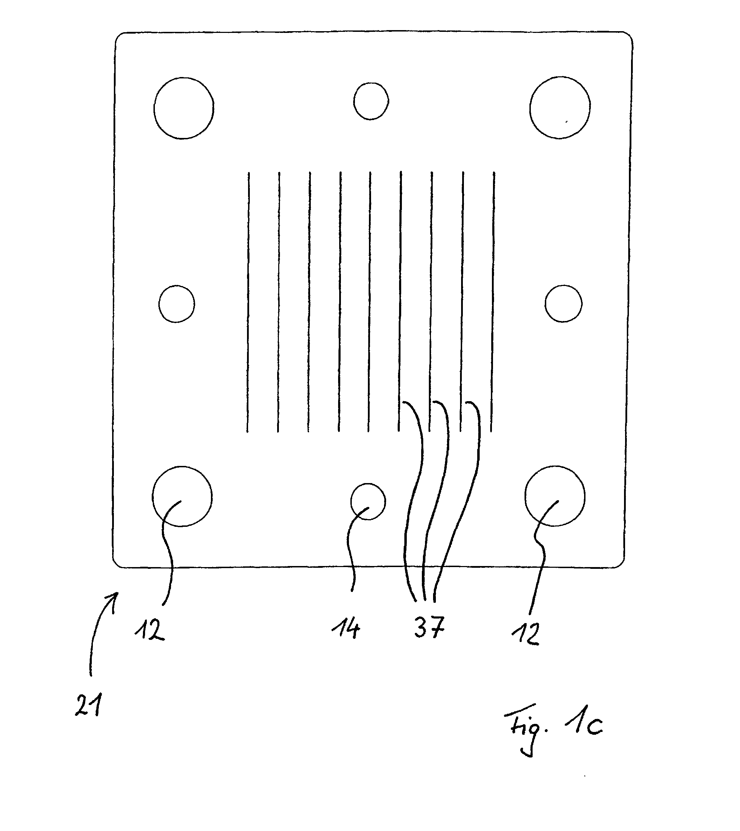

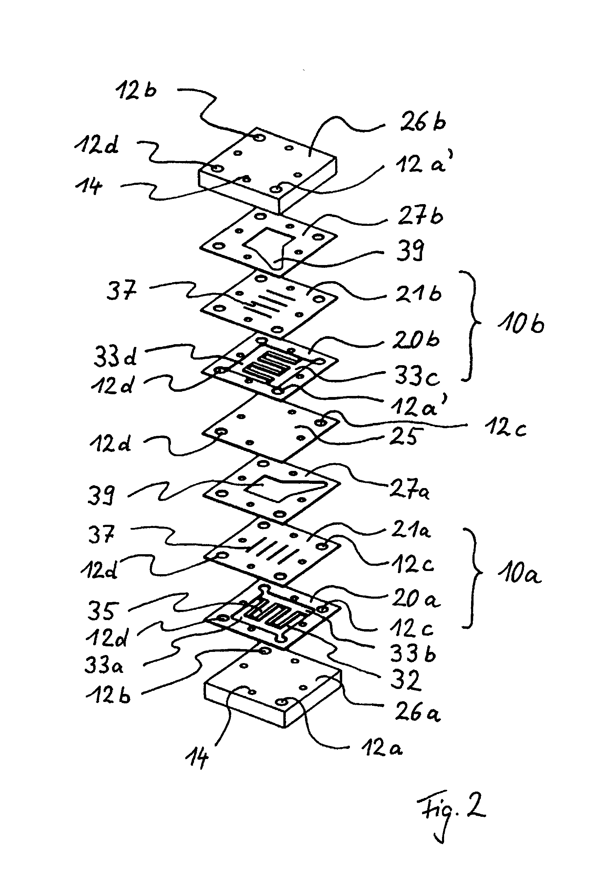

In Fig. 2 ist ein Mischersystem dargestellt. Dieses Mischersystem entsteht dadurch, daß zwei Mikromischer, die entsprechend dem Beispiel aus Fig. 1a-c ausgeführt sind, übereinander angeordnet werden. Zu unterst liegt eine Abdeckplatte 26a mit Ausnehmungen 14 für Schrauben sowie mit zwei Durchbrüchen 12a,b, durch die die Edukte A und B zugeführt werden. (Edukt A durch den vorderen rechten Durchbruch 12a und Edukt B durch den hinteren linken Durchbruch 12b.) Die Strömungsrichtung verläuft dabei von unten nach oben.

Darüber befindet sich eine erste Mischplatte 20a. Zusätzlich zu den zwei Zuführkammern 33a und 33b, den Hauptkanälen 35 und den Mischbereichen 32 weist die Mischplatte 20a zwei Durchbrüche 12c,d auf, die in zwei entgegengesetzten Ecken der Mischplatte 20a angeordnet sind. Die Zuführkammern 33a und 33b sind derart ausgebildet, daß sie mit den Durchbrüchen 12a,b der unteren Abdeckplatte 26a in Verbindung stehen und darüber die Edukte A,B in die Zuführkammern 33a,b zugeführt werden.

Über der ersten Mischplatte 20a ist eine erste Abführplatte 21 a mit Schlitzen 37 angeordnet. Durch diese Schlitze 37 tritt das Zwischenprodukt C, das aus A und B entstanden ist, aus und wird in einer Sammelkammer 39, die aus den über der Abführplatte 21 a angeordneten Platten 27a und 25 gebildet wird, eingesammelt und auf den Durchbruch 12c geführt.

Das Zwischenprodukt C wird über die Zwischenplatte 25 in die Zuführkammer 33c der zweiten Mischplatte 20b als Edukt für die zweite Reaktion zugeführt. In die zweite Zuführkammer 33d der Mischplatte 20b wird das Edukt D zugeführt, und zwar durch Durchbrüche 12d, die einen Kanal durch den vorderen linken Kantenbereich des Mischersystems bilden. Über der zweiten Mischplatte 20b sind wieder eine Abführplatte 21b sowie eine Sammelplatte 27b angeordnet.

Die Sammelplatte 27b bildet zusammen mit der oberen Abdeckplatte 26b eine Sammelkammer 39 für das Produkt aus C und D, das zum oberen rechten vorderen Durchbruch 12a' geführt wird und durch die obere Abdeckplatte 26b austreten kann.

Durch die vorderen linken Durchbrüche 12d wird das Edukt D geführt, durch die unteren hinteren linken Durchbrüche 12b wird das Edukt B geführt, durch die hinteren rechten Durchbrüche 12c wird das Zwischenprodukt C geführt, durch die unteren vorderen rechten Durchbrüche 12a wird das Edukt A geführt und durch die oberen vorderen rechten Durchbrüche 12a' wird das Endprodukt geführt. Dabei wird die Grenze zwischen dem unteren Mikromischer 10a dem oberen Mikromischer 10b durch die Zwischenplatte 25 gebildet.

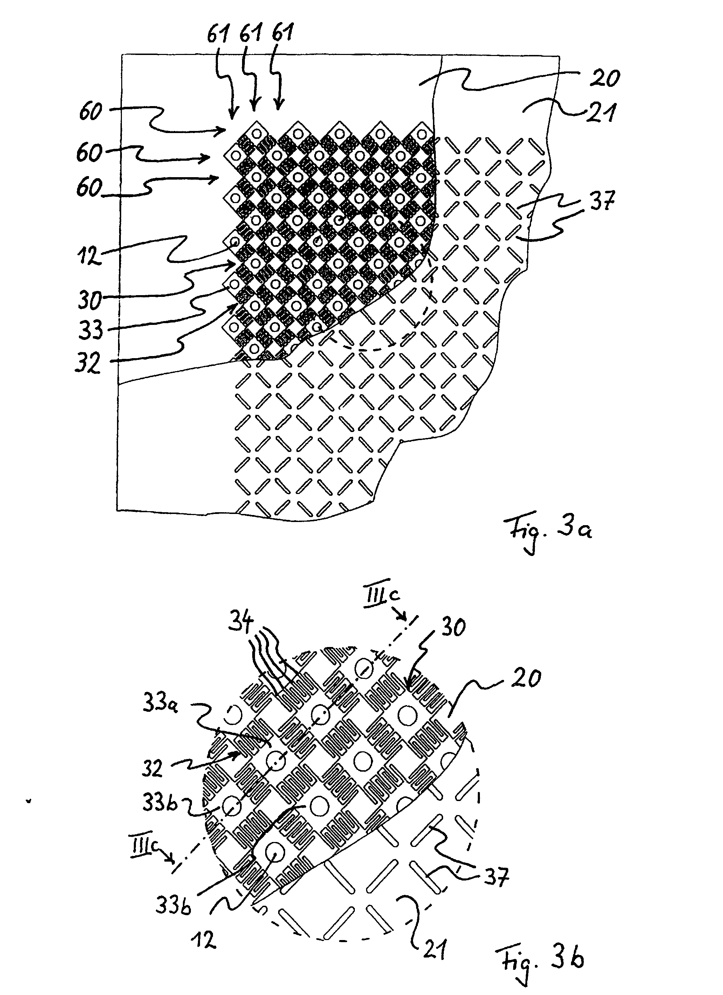

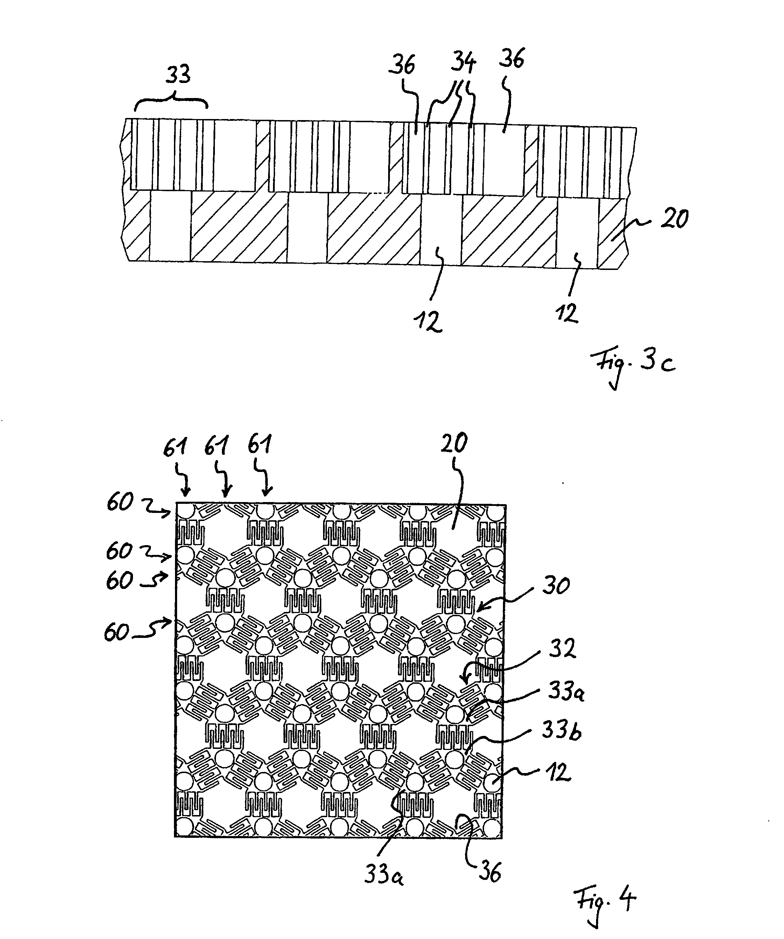

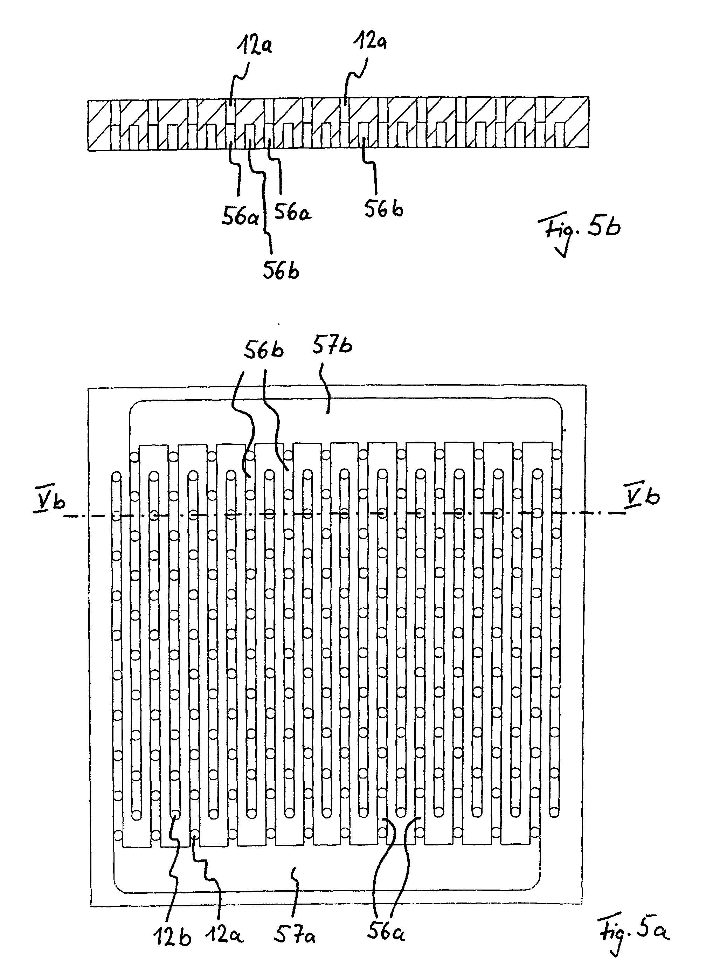

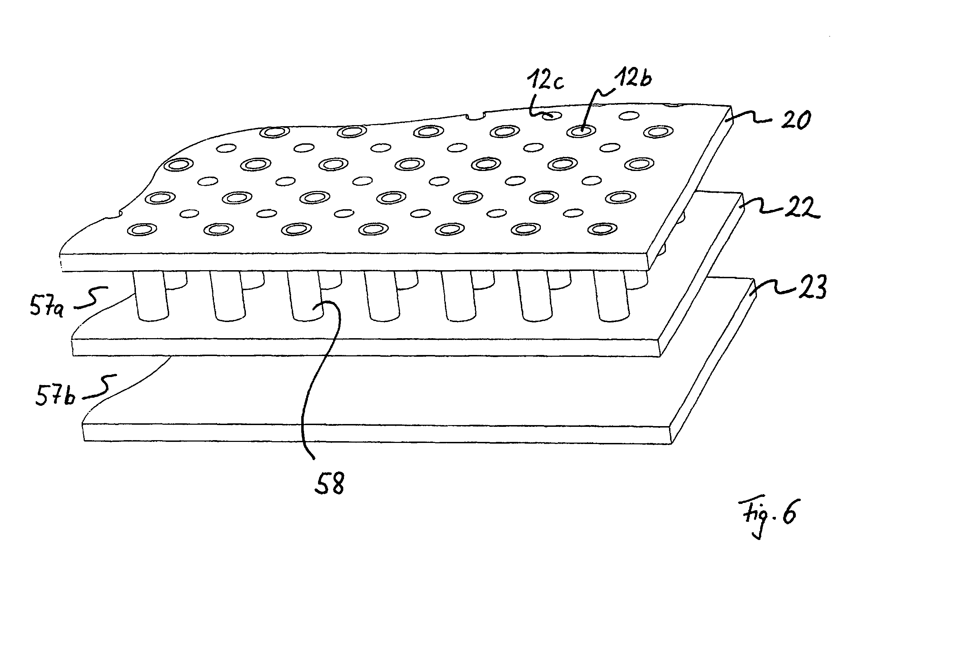

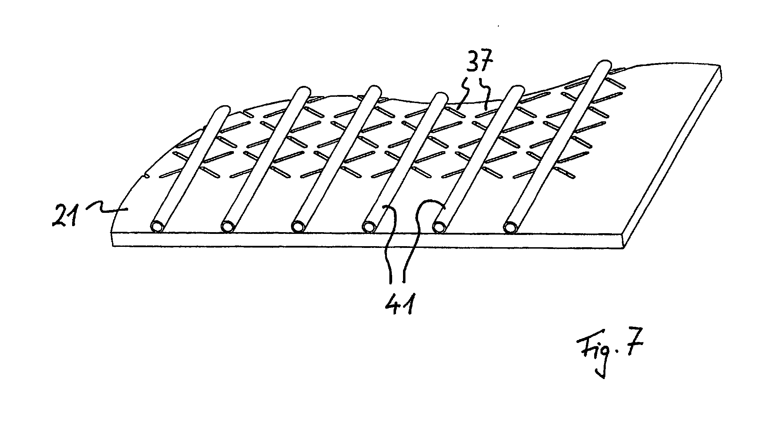

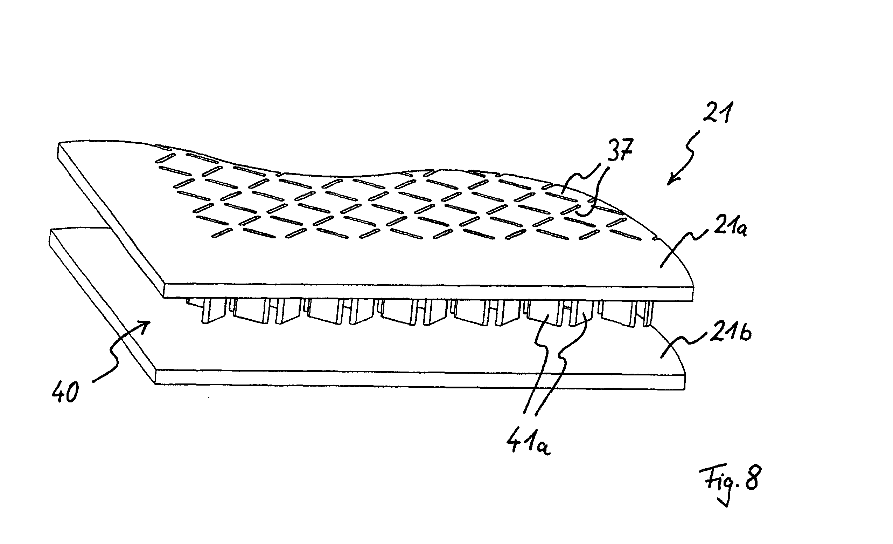

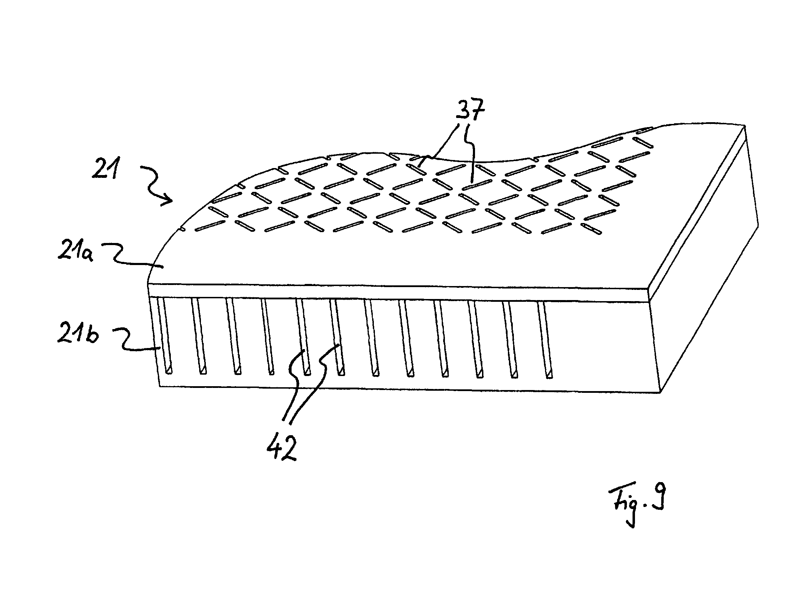

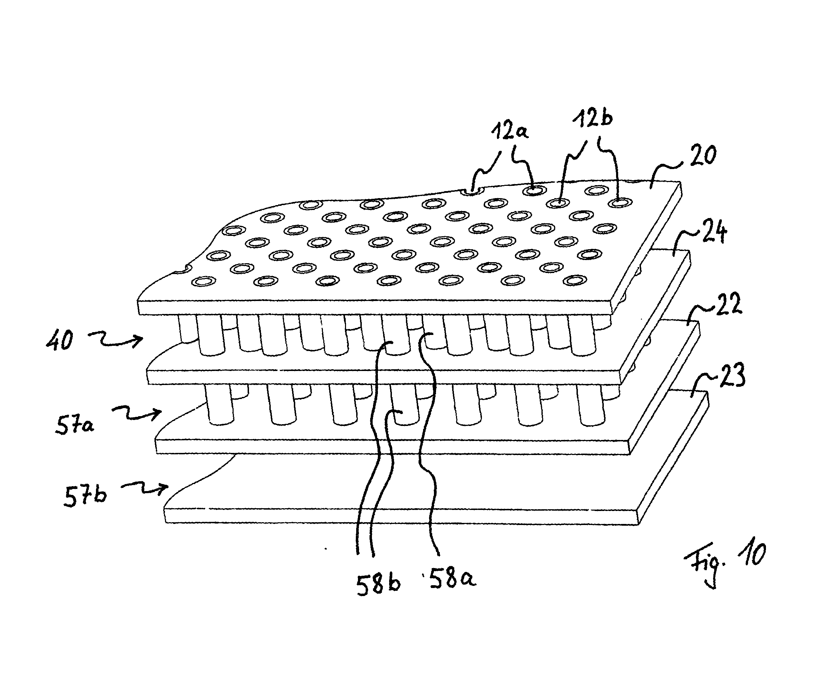

In Fig. 3a ist ein weiteres Ausführungsbeispiel für eine Mischplatte 20 und die dazugehörige Abführplatte 21 dargestellt. Die Zuführkammern 33 haben einen quadratischen Grundriß und weisen an jeder der vier Seiten Mischbereiche 32 auf. Eine Mischzelle 30 wird von einer Zuführkammer 33 und vier Mischbereichen 32 gebildet. Jede der Zuführkammern 33 hat ihren eigenen Durchbruch 12, um mit einem Edukt versorgt zu werden. Die Zuführkammern 33 sind äquidistant in Reihen 60 und Spalten 61 angeordnet, wobei eine Zuführkammer 33a eines Eduktes immer von vier Zuführkammem 33b des anderen Eduktes umgeben ist. Diese Anordnung der Zuführkammern 33 in einem regelmäßigen Raster spiegelt sich in der Anordnung der Schlitze 37 der über der Mischplatte 20 liegenden Abführplatte 21 wider. Die Schlitze 37 verlaufen längs der Kanten von Quadraten und bilden ein regelmäßiges Kästchenmuster.

In Fig. 3b ist der mit einer gestrichelten Linie angedeutete Ausschnitt aus Fig. 3a vergrößert dargestellt. In diesem vergrößerten Ausschnitt sind die die Mischbereiche 32 bildenden Kanalfinger 34 deutlicher zu erkennen.

Der Schnitt durch den in Fig. 3b dargestellten Ausschnitt längs der Linie IIIc-IIIc ist in Fig. 3c dargestellt. Dort sind deutlich die Durchbrüche 12 zu erkennen, durch die Edukte in die Zuführkammern 33 geleitet werden. Außerdem kann man die um die Zuführkammer angeordneten Kanalfinger 34 und die die Kanalfinger 34 begrenzenden Wände 36 erkennen.

Die Breite der einzelnen Kanalfinger 34 kann im Bereich von 5 bis 150 µm und die Höhe der die Kanalfinger begrenzenden Wände 36 im Bereich von 50 µm bis 2 mm liegen. Die Breite der Auslaßschlitze 37 wird aufgrund des notwendigen Druckverlustes vorzugsweise kleiner als die Höhe der die Kanalfinger 34 begrenzenden Wände 36 gewählt. Weiterhin muß zur vollständigen Mischung der Edukte die Breite der Auslaßschlitze 37 in der Abführplatte 21 kleiner sein als der sich überlappende Bereich der benachbarten Kanalfinger 34 im Mischbereich 32.

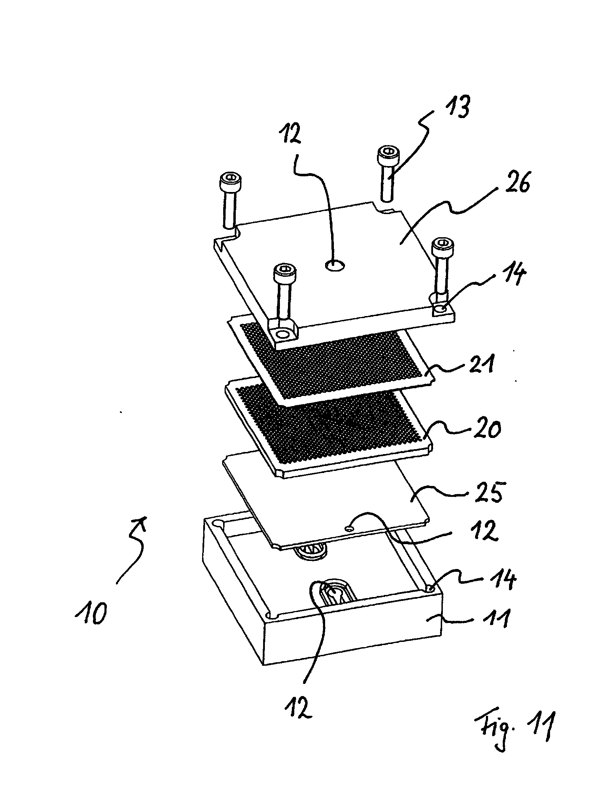

Eine Abwandlung des eben dargestellten Ausführungsbeispiels ist in Fig. 4 zu sehen. Dort haben die Zuführkammern 33 eine dreieckige Grundfläche mit drei gleichlangen Seiten. Wieder ist an allen Seiten der Zuführkammer 33 ein Mischbereich 32 angeordnet und die Zuführkammern selbst sind auf den Ecken von nebeneinanderliegenden, gleichmäßigen Hexagonen angeordnet. Die Zuführkammer 33a für ein Edukt ist nun von drei Zuführkammern 33b für das andere Edukt umgeben.

In Fig. 5a ist ein erstes Beispiel für die Eduktzufuhr dargestellt. Es handelt sich um eine strukturierte Platte, die auf der Rückseite der Mischplatte beispielsweise durch anodisches Bonden angebracht wird. An zwei gegenüberliegenden Seiten der Platte sind eine Vorratskammer 57a für das Edukt A und eine Vorratskammer 57b für das Edukt B ausgebildet. Von diesen Vorratskammern 57a,b gehen Kanäle 56a,b ab. Diese Kanäle 56a,b greifen kammförmig ineinander. Sie verlaufen unterhalb der Zuführkammer der Mischkammer und sind parallel zueinander angeordnet. Von jedem Kanal 56a,b gehen Durchbrüche 12a,b ab, die zu den entsprechenden Durchbrüchen 12a,b der Mischplatte ausgerichtet sind. Über die Durchbrüche 12a,b stehen die Zuführkammern der Mischplatte mit den Kanälen 56a,b und somit auch mit den Vorratskammern 57a,b in Verbindung. Über diese Verbindung werden die Edukte A,B den Zuführkammern zugeführt. Herstellen lassen sich diese Strukturen beispielsweise durch plasmaunterstütztes Tiefenätzen in Silicium.

Der Schnitt entlang der Linie Vb-Vb ist in Fig. 5b dargestellt. Dort sieht man noch einmal die Kanäle 56a,b und wegen der speziellen Lage des Schnittes nur die Durchbrüche 12a.

Ein weiteres Ausführungsbeispiel für die Eduktzufuhr ist in Fig. 6 dargestellt. Bei der Mischplatte 20 sind nur die Durchbrüche 12a,b dargestellt. Unterhalb der Mischplatte 20 ist eine erste Zusatzplatte 22 und darunter eine zweite Zusatzplatte 23 angeordnet. Die drei Platten 20,22,23 sind parallel zueinander und beabstandet voneinander angeordnet, so daß zwischen der Mischplatte 20 und der ersten Zwischenplatte 22 eine Vorratskammer 57a für das Edukt A gebildet wird und zwischen der ersten Zusatzplatte 22 und der zweiten Zusatzplatte 23 eine Vorratskammer 57b für das Edukt B gebildet wird. Über die Durchbrüche 12a in der Mischplatte 20 stehen die Zuführkammern der Mischplatte 20 direkt in Verbindung mit der Vorratskammer 57a für das Edukt A und können mit diesem beschickt werden. Das Edukt B hingegen muß durch die Vorratskammer 57a geführt werden. Zu diesem Zweck weist die erste Zwischenplatte 22 Ausnehmungen auf, die unterhalb der Durchbrüche 12b der Mischplatte 20 angeordnet sind. Durch die Durchbrüche 12b sowie die Ausnehmungen der ersten Zwischenplatte 22 werden Hohlkörper in Form von Röhrchen 58 geführt. Diese Röhrchen 58 bilden die Verbindung zwischen der Vorratskammer 57b und den Zuführkammern für das Edukt B.

In Fig. 7 ist ein erstes Ausführungsbeispiel für die Integration eines Wärmetauschers in den Mikromischer dargestellt. In diesem Beispiel wird das Mischprodukt gekühlt oder geheizt, indem auf der Abführplatte 21 zwischen den Schlitzen 37 Hohlkörper in Form von Röhrchen 41 angebracht sind, die sich über die gesamte Abführplatte 21 erstrecken. Durch diese Röhrchen 41 wird ein Kühlmittel bzw. ein Heizmittel geführt.

In Fig. 8 ist ein zweites Ausführungsbeispiel für die Integration eines Wärmetauschers dargestellt. Auch in diesem Beispiel wird wieder das Produkt gekühlt oder geheizt. Die Abführplatte wird aus zwei Einzelplatten 21a und 21b gebildet. Diese sind parallel und beabstandet zueinander angeordnet, so daß zwischen ihnen eine Kammer 40 zur Aufnahme eines Heiz- bzw. Kühlmittels entsteht. Beide Einzelplatten 21a und 21b sind mit Auslaßschlitzen 37 versehen. Um das Produkt von einer Seite der Abdeckplatte 21 auf die andere Seite zu führen, sind in den Schlitzen abgeplattete Hohlkörper 41a angeordnet, die eine Verbindung von der einen Seite auf die andere Seite der Abführplatte 21 bilden.

In Fig. 9 ist ein drittes Ausführungsbeispiel dargestellt, um das Produkt zu kühlen oder zu erwärmen. Die Abführplatte 21 ist wieder zweistückig ausgeführt mit einer oberen geschlitzten Platte 21a und einer sehr viel dickeren, ebenfalls geschlitzten unteren Platte 21b. Zusätzlich zu den Schlitzen 37 sind in der unteren, dicken Platte 21b durchgehende Schlitze 42 zur Aufnahme des Kühloder Heizmittels ausgebildet, die senkrecht zu den Schlitzen 37 für das Mischprodukt verlaufen. Vorteilhafterweise wird für die Herstellung der unteren Platte 21b ein gut wärmeleitendes Material verwendet.

In manchen Fällen kann es auch gewünscht sein, die Edukte vorzuwärmen oder abzukühlen. Ein Ausführungsbeispiel dazu ist in Fig. 10 dargestellt. Es handelt sich um einen Mikromischer mit Vorratskammern 57a,b für die Eduktzuführung, die durch zwei zusätzliche Platten 22,23 gebildet werden. Zwischen der ersten zusätzlichen Platte 22 und der Mischplatte 20 ist eine dritte zusätzliche Platte 24 angeordnet. Dadurch bildet sich zwischen der Mischplatte 20 und der dritten zusätzlichen Platte 24 eine weitere Kammer 40, in der sich ein Heiz- oder Kühlmittel befindet. Da beide Edukte A und B durch diese Wärmetauscherkammer 40 zu den Zuführkammern 33a,b in der Mischplatte 20 geführt werden müssen, weist die dritte zusätzliche Platte 24 Ausnehmungen auf, die unterhalb der Durchbrüche 12a,b der Mischplatte 20 angeordnet sind. Durch diese Ausnehmungen werden Hohlkörper in Form von Röhrchen 58a,b geführt, die in den Durchbrüchen 12a,b der Mischplatte 20 münden und auf der anderen Seite entweder mit der Vorratskammer 57a oder der Vorratskammer 57b in Verbindung stehen. Auf dem Weg aus der entsprechenden Vorratskammer 57a,b zur Zuführkammer 33a,b der jeweiligen Edukte A,B werden die Edukte A,B gleichmäßig temperiert.

In Fig. 11 ist eine Explosionsdarstellung eines Mikromischers 10 zu sehen. Dieser Mikromischer 10 besteht aus einem Gehäuse 11, das zwei Durchbrüche 12 für jedes Edukt A,B aufweist. Außerdem weist das Gehäuse 11 Ausnehmungen 14 zur Aufnahme von Schrauben 13 auf. Zu unterst ist in dem Gehäuse eine Zwischenplatte 25 angeordnet mit zwei Durchbrüchen 12 für jedes Edukt. Über der Zwischenplatte 25 ist eine beidseitig strukturierte Mischplatte 20 angeordnet. Auf ihrer Unterseite weist sie Mikrostrukturen zur Zuführung der Edukte auf (siehe auch Fig. 5a). Auf der Oberseite der Mischplatte 20 sind Mischzellen mit quadratischen Zuführkammern angeordnet. Über der Mischplatte 20 ist eine entsprechende geschlitzte Abführplatte 21 angeordnet. An diese schließt sich die Abdeckplatte 26 an. Diese Abdeckplatte 26 weist einen Durchlaß 12 für das Mischprodukt auf. Außerdem weist die Abdeckplatte 26 Ausnehmungen 14 zur Aufnahme von Schrauben 13 auf. Diese Schrauben 13 dienen dazu, den Mikromischer 10 fest zusammenzuschrauben.

In einem beispielhaften Mikromischer 10 dieser Art kann bei einer Auslegung mit ca. 1500 Zuführkammern pro Mischplatte 20 einer Fläche von 45 x 45 mm ein Volumenstrom von 700 l/h bei einem Druckverlust von etwa 1 bar erreicht werden.

### Bezugszeichen

- 10: Mikromischer
- 11: Gehäuse
- 12: Durchbruch
- 13: Schraube
- 14: Ausnehmung
- 20: Mischplatte
- 21: Abführplatte
- 22: erste Zusatzplatte
- 23: zweite Zusatzplatte
- 24: dritte Zusatzplatte
- 25: Zwischenplatte
- 26: Abdeckplatte
- 27: Sammelplatte
- 30: Mischzelle
- 31: Mikrostmktur
- 32: Mischbereich
- 33: Zuführkammer
- 34: Kanalfinger
- 35: Hauptkanal
- 36: Wand
- 37: Auslaßschlitz
- 39: Sammelausnehmung
- 40: Wärmetauscherkammer
- 41: Hohlkörper
- 41a: abgeplatteter Hohlkörper
- 42: Wärmetauscherschlitz
- 56: Kanal
- 57: Vorratskammer
- 58: Hohlkörper
- 60: Reihe
- 61: Spalte

## Patentansprüche

1. Mikromischer (10) zum Mischen von mindestens zwei Edukten mit Durchbrüchen (12) zum Zuführen der Edukte und/ oder zum Abführen des Mischprodukts, mit mindestens einer Mischplatte (20) mit Mischzellen (30) begrenzenden Mikrostrukturen (31), wobei jede Mischzelle (30) eine Zuführkammer (33) aufweist, an die mindestens eine Gruppe von Kanalfingern (34) angrenzt, die zur Bildung eines Mischbereichs (32) kammartig zwischen die Kanalfinger (34) einer Gruppe der benachbarten Zuführkammer (33) eingreift, und mit einer auf der Mischplatte (20) angeordneten Abführplatte (21), die über jedem Mischbereich (32) einen Auslaßschlitz (37) aufweist, der sich senkrecht zu den Kanalfingern (34) erstreckt, **dadurch gekennzeichnet, daß** jede Mischzelle (30) mindestens zwei Mischbereiche (32) aufweist.

2. Mikromischer nach Anspruch 1, **dadurch gekennzeichnet, daß** die überwiegende Anzahl der Zuführkammern (33) parallel angeordnete Hauptkanäle (35) aufweist, die kammartig ineinandergreifen und von denen die Kanalfinger (34) abzweigen.

3. Mikromischer nach Anspruch 1, **dadurch gekennzeichnet, daß** die überwiegende Anzahl der Zuführkammern (33) in der Plattenebene allseitig von Mischbereichen (32) umgeben ist.

4. Mikromischer nach Anspruch 1 oder 3, **dadurch gekennzeichnet, daß** die Zuführkammern (33) entsprechend den Edukten alternierend in Reihen und/oder Spalten angeordnet sind.

5. Mikromischer nach Anspruch 3 oder 4, **dadurch gekennzeichnet, daß** die Zuführkammern (33) eine viereckige Grundfläche aufweisen.

6. Mikromischer nach Anspruch 3 oder 4, **dadurch gekennzeichnet, daß** die Zuführkammern (33) eine dreieckige Grundfläche aufweisen.

7. Mikromischer nach einem der Ansprüche 3 bis 6, **dadurch gekennzeichnet, daß** die den Mischzellen (30) abgewandte Seite der Mischplatte (20) strukturiert ist und zwei Vorratskammern (57a,b) für die Edukte aufweist,
parallel angeordnete, von den Vorratskammern (57a,b) abzweigende und unterhalb der Zuführkammern (33) verlaufende Kanäle (56) aufweist, wobei die Kanäle (56) für das eine Edukt kammartig mit den Kanälen (56) für das andere Edukt ineinandergreifen,
und Durchbrüche (12) aufweist, die von den Kanälen (56) in die Zuführkammern (33) führen.

8. Mikromischer nach einem der Ansprüche 3 bis 6, **dadurch gekennzeichnet, daß** unterhalb der Mischplatte (20) zur Bildung von Vorratskammern (57a,b) für die beiden Edukte eine erste (22) und darunter eine zweite Platte (23) angeordnet sind, wobei die Vorratskammern (57a,b) über Zuleitungen für das jeweilige Edukt mit den entsprechenden Zuführkammern (33) verbunden sind, wobei die Zuleitungen für das in der unteren Vorratskammer (57b) befindliche Edukt als Hohlkörper (58) ausgebildet sind, die das Edukt durch die obere Vorratskammer (57a) hindurchführen.

9. Mikromischer nach einem der Ansprüche 3 bis 8, **dadurch gekennzeichnet, daß** in ihm ein Wärmetauscher integriert ist.

10. Mikromischer nach Anspruch 9, **dadurch gekennzeichnet, daß** auf der Abführplatte (21) zwischen den Schlitzen (37) Hohlkörper (41) angeordnet sind, die Heiz- oder Kühlmittel enthalten.

11. Mikromischer nach Anspruch 9, **dadurch gekennzeichnet, daß** innerhalb der Abführplatte (21) Heiz- oder Kühlmittel durchgeführt werden.

12. Mikromischer nach Anspruch 8, **dadurch gekennzeichnet, daß** zwischen der Mischplatte (20) und den beiden Vorratskammern (57a,b) für Edukte eine dritte Kammer (40) für ein Kühl- oder Heizmittel angeordnet ist und beide Edukte mittels Hohlkörpern (58a,b) durch die dritte Kammer (40) den Zuführkammern (33) der Mischplatte (20) zugeführt werden.

13. Mikromischeranordnung zum Mischen von zwei oder mehr Edukten mit zwei oder mehreren übereinandergestapelten Mikromischern (10a,b) nach einem oder mehreren der vorherigen Ansprüche.

14. Mikromischeranordnung nach Anspruch 13, **dadurch gekennzeichnet, daß** die Mikromischer (10a,b) fluidisch parallel miteinander verbunden sind.

15. Mikromischeranordnung nach Anspruch 13, **dadurch gekennzeichnet, daß** die Mikromischer (10a,b) fluidisch seriell miteinander verbunden sind.

16. Mikromischeranordnung nach Anspruch 15, **dadurch gekennzeichnet, daß** die Mikromischer (10a,b) zum Mischen von drei oder mehr Edukten seriell miteinander verbunden sind, wobei der erste Mikromischer (10a) zum Mischen der ersten zwei Edukte unter Erhalt eines Zwischenprodukts ausgestaltet ist und mindestens ein nachfolgender Mikromischer (10b) zum Mischen des dritten Edukts mit dem Zwischenprodukt ausgestaltet ist.

17. Mikromischeranordnung nach einem der Ansprüche 13 bis 16, **dadurch gekennzeichnet, daß** oberhalb, unterhalb und/oder zwischen benachbarten Mikromischern (10a,b) eine oder mehrere zusätzliche Platten (25,26a,b) zum Zuführen der Edukte, zum Sammeln und/oder Verteilen von Zwischenprodukten und/oder zum Abführen des Mischprodukts vorgesehen sind.

## Claims

1. Micromixer (10) for mixing at least two educts having perforations (12) for supplying the educts and/or for discharging the mixed product, having at least one mixing plate (20) with microstructures (31) defining mixing cells (30), wherein each mixing cell (30) has a supply chamber (33), on which at least one group of channel fingers (34) borders, which engages like a comb between the channel fingers (34) of a group of the adjacent supply chamber (33) to form a mixing region (32), and having a discharge plate (21) arranged on the mixing plate (20), which discharge plate (21) has above each mixing region (32) a discharge slot (37), which extends vertically to the channel fingers (34), **characterised in that** each mixing cell (30) has at least two mixing regions (32).

2. Micromixer according to claim 1, **characterised in that** the majority of supply chambers (33) have main channels (35) arranged in parallel which engage in one another like a comb and the channel fingers (34) branch off from them.

3. Micromixer according to claim 1, **characterised in that** the majority of supply chambers (33) in the plate plane are surrounded on all sides by mixing regions (32).

4. Micromixer according to claim I or 3, **characterised in that** the supply chambers (33) are arranged to be alternating in rows and/or columns according to the educts.

5. Micromixer according to claim 3 or 4, **characterised in that** the supply chambers (33) have a rectangular base.

6. Micromixer according to claim 3 or 4, **characterised in that** the supply chambers (33) have a triangular base.

7. Micromixer according to one of claims 3 to 6, **characterised in that** the side of the mixing plate (20) facing away from the mixing cells (30) is structured and has two stock chambers (57a, b) for the educts, has channels (56) arranged in parallel, branching off from the stock chambers (57a, b) and running below the supply chambers (33), wherein the channels (56) for the one educt engage in one another like a comb with the channels (56) for the other educt, and has perforations (12) which lead from the channels (56) into the supply chambers (33).

8. Micromixer according to one of claims 3 to 6, **characterised in that** a first (22) and therebelow a second plate (23) are arranged below the mixing plate (20) to form stock chambers (57a, b) for the two educts, wherein the stock chambers (57a, b) are connected to the corresponding supply chambers (33) via supply pipes for the particular educt, wherein the supply pipes for the educt situated in the lower stock chamber (57b) are designed as hollow bodies (58), which pass the educt through the upper stock chamber (57a).

9. Micromixer according to one of claims 3 to 8, **characterised in that** a heat exchanger is integrated in it.

10. Micromixer according to claim 9, **characterised in that** hollow bodies (41), which contain heating or cooling agent, are arranged on the discharge plate (21) between the slots (37).

11. Micromixer according to claim 9, **characterised in that** heating or cooling agents are passed within the discharge plate (21).

12. Micromixer according to claim 8, **characterised in that** a third chamber (40) for a cooling or heating agent is arranged between the mixing plate (20) and the two stock chambers (57a, b) for educts and both educts are supplied to the supply chambers (33) of the mixing plate (20) by means of hollow bodies (58a, b) through the third chamber (40).

13. Micromixer arrangement for mixing of two or more educts with two or more micromixers (10a, b) stacked one above another according to one or more of the preceding claims.

14. Micromixer arrangement according to claim 13, **characterised in that** the micromixers (10a, b) are fluidly connected to one another in parallel.

15. Micromixer arrangement according to claim 13, **characterised in that** the micromixers (10a, b) are fluidly connected to one another in series.

16. Micromixer arrangement according to claim 15, **characterised in that** the micromixers (10a, b) are connected to one another in series for mixing three or more educts, wherein the first micromixer (10a) is designed for mixing the first two educts while obtaining an intermediate product and at least one subsequent micromixer (10b) is designed for mixing the third educt with the intermediate product.

17. Micromixer arrangement according to one of claims 13 to 16, **characterised in that** one or more additional plates (25, 26a, b) for supplying the educts, for collecting and/or distributing intermediate products and/or for discharging the mixed product, are provided above, below and/or between adjacent micromixers (10a, b).

## Revendications

1. Micromélangeur (10) pour mélanger au moins deux éduits avec des passages (12) pour l'amenée des éduits et/ou pour l'évacuation du produit mélangé, avec au moins une plaque de mélange (20) avec des microstructures (31) limitant des cellules de mélange (30), chaque cellule de mélange (30) comportant une chambre d'amenée (33) adjacente à au moins un groupe de doigts de canaux (34) qui, pour former une zone de mélange (32), engrène à la manière d'un peigne entre les doigts de canaux (34) d'un groupe des chambres d'amenée voisines (33) et avec une plaque d'évacuation (21) disposée sur la plaque de mélange (20) qui comporte une fente d'échappement (37) sur chaque zone de mélange (32) qui s'étend verticalement par rapport aux doigts de canaux (34), **caractérisé en ce que** chaque cellule de mélange (30) comporte au moins deux zones de mélange (32).

2. Micromélangeur selon la revendication 1, **caractérisé en ce que** la majeure partie des chambres d'amenée (33) comporte des canaux principaux (35) disposés parallèlement qui engrènent les uns dans les autres à la manière de peignes et à partir desquels bifurquent les doigts de canaux (34).

3. Micromélangeur selon la revendication 1, **caractérisé en ce que** la majeure partie des chambres d'amenée (33) est entourée de tous les côtés par des zones de mélange (32) dans le plan de la plaque.

4. Micromélangeur selon la revendication 1 ou 3, **caractérisé en ce que** les chambres d'amenée (33) sont disposées alternativement en rangées et/ou en colonnes en fonction des éduits.

5. Micromélangeur selon la revendication 3 ou 4, **caractérisé en ce que** les chambres d'amenée (33) comportent une surface de base carrée.

6. Micromélangeur selon la revendication 3 ou 4, **caractérisé en ce que** les chambres d'amenée (33) comportent une surface de base triangulaire.

7. Micromélangeur selon l'une des revendications 3 à 6, **caractérisé en ce que** le côté de la plaque de mélange (20) opposé aux cellules de mélange (30) est structuré et comporte deux chambres de stockage (57a,b) pour les éduits,
comporte des canaux (56) disposés parallèlement, bifurquant à partir des chambres de stockage (57a,b) et s'étendant en dessous des chambres d'amenée (33), les canaux (56) pour un éduit s'engrenant dans les canaux (56) pour l'autre éduit à la manière de peignes,
et comporte des passages (12) qui conduisent des canaux (56) dans les chambres d'amenée (33).

8. Micromélangeur selon l'une des revendications 3 à 6, **caractérisé en ce qu'**une première (22) et, en dessous, une deuxième plaque (23) sont disposées sous la plaque de mélange (20) pour former des chambres de stockage (57a,b) pour les deux éduits, les chambres de stockage (57a,b) étant raccordées aux chambres d'amenée (33) correspondantes par des conduites d'alimentation pour l'éduit correspondant, les conduites d'alimentation étant conçues comme des corps creux (58) pour l'éduit se trouvant dans la chambre de stockage (57b) inférieure qui transportent l'éduit à travers la chambre de stockage (57a) supérieure.

9. Micromélangeur selon l'une des revendications 3 à 8, **caractérisé en ce qu'**un échangeur de chaleur est intégré dans celui-ci.

10. Micromélangeur selon la revendication 9, **caractérisé en ce que** des corps creux (41), qui contiennent des moyens de chauffage ou de refroidissement, sont disposés sur la plaque d'évacuation (21) entre les fentes (37).

11. Micromélangeur selon la revendication 9, **caractérisé en ce que** des moyens de chauffage ou de refroidissement sont mis en oeuvre à l'intérieur de la plaque d'évacuation (21).

12. Micromélangeur selon la revendication 8, **caractérisé en ce que**, entre la plaque de mélange (20) et les deux chambres de stockage (57a,b) pour les éduits, une troisième chambre (40) est disposée pour un moyen de refroidissement ou de chauffage et **en ce que** les deux éduits sont amenés aux chambres d'amenée (33) de la plaque de mélange (20) à travers la troisième chambre (40) à l'aide de corps creux (58a,b).

13. Dispositif de micromélangeur pour mélanger deux éduits ou plus, avec deux micromélangeurs (10a,b) ou plus empilés les uns sur les autres, selon une ou plusieurs des revendications précédentes.

14. Dispositif de micromélangeur selon la revendication 13, **caractérisé en ce que** les micromélangeurs (10a,b) sont en communication fluidique en parallèle les uns avec les autres.

15. Dispositif de micromélangeur selon la revendication 13, **caractérisé en ce que** les micromélangeurs (10a,b) sont en communication fluidique en série les uns avec les autres.

16. Dispositif de micromélangeur selon la revendication 15, **caractérisé en ce que** les micromélangeurs (10a,b) pour mélanger trois éduits ou plus sont raccordés en série les uns avec les autres, le premier micromélangeur (10a) étant conçu pour le mélange des deux premiers éduits avec obtention d'un produit intermédiaire et au moins un micromélangeur (10b) placé en aval étant conçu pour le mélange du troisième éduit avec le produit intermédiaire.

17. Dispositif de micromélangeur selon l'une des revendications 13 à 16, **caractérisé en ce que**, au-dessus, au-dessous et/ou entre des micromélangeurs (10a,b) voisins, une ou plusieurs plaques supplémentaires (25,26a,b) sont prévues pour amener les éduits, pour rassembler et/ou répartir les produits intermédiaires et/ou pour évacuer le produit mélangé.
